# EUROPEAN PATENT APPLICATION

(11) **EP 0 979 717 A1**
(43) Date of publication of application: **16.02.2000**
(21) Application number: 98830749.2
(22) Date of filing: 11.12.1998
(51) Int. Cl.: B29C 33/38, B29C 33/56

(54) **Method for the manufacture of a mould for use in injection moulding of components of plastic material**

(30) Priority: 05.08.1998 IT TO980681
(71) Applicant: STOLA S.p.A., 10090 Cascine Vica - Rivoli (Torino) (IT)
(72) Inventor: Stola, Roberto, 10099 San Mauro Torinese, (Torino) (IT); Stola, Alfredo, 10090 Villarbasse, (Torino) (IT); Gallina, Luigi, 10099 San Mauro Torinese, (Torino) (IT); Della Rocca, Vittorio, 10092 Beinasco, (Torino) (IT)
(74) Representative: Notaro, Giancarlo

(57) **Abstract**

A rapid and inexpensive method is described for obtaining moulds (12,19) for use in the production by injection moulding of relatively limited series, such as in the order of 500 pieces, of components of plastic material, such as motor-vehicle dashboards, having relatively high strength characteristics.

The method comprises spraying a metal layer (3) on the surface (1) of a model (2), providing a formwork (8) around and above said metal layer, pouring refractory concrete (11) within said formwork (8), so as to obtain, upon hardening, a first half-mould (12), separating the model from said half-mould (12) applying a layer of filling material of predetermined thickness on top of the metal layer (3), spraying a further metal layer (13) on said filling material, providing a formwork (16) above said further metal layer (13), and pouring refractory concrete therewithin so as to obtain, upon hardening, a second half-mould (19).

## Description

The present invention relates to the methods for manufacture of moulds for use in injection moulding of components of plastic material.

In particular, the invention relates to moulds used in the production of motor-vehicle components, such as the driving dashboard for the passenger compartment of the motor-vehicle.

According to the conventional art, whenever it becomes necessary to put a new model of motor-vehicle into production, a limited series of prototypes is initially provided which are for carrying out the first road tests, before initiating mass production. Typically, a limited series, for instance in the order of about five hundreds pieces, of driving dashboards to be mounted on these prototypes is initially provided. In order to reduce costs and time for the production of this initial series of dashboards, the latter are manufactured by using provisional moulds, which are not able to withstand the high pressures and temperatures which must instead be reached when making the final products in the final mass production. As a consequence, the dashboards which are used in the above mentioned first series of prototypes do not have adequate strength characteristics and for instance are not able to successfully pass the crash resistance tests which are requested by the regulations for homologation of the motor-vehicle. Therefore, in order to carry out the above mentioned tests which are necessary for homologation, it is generally necessary to wait for the first cars of the final mass production, with a resulting prolongation of the time necessary to obtain homologation of the motor-vehicle.

The object of the present invention is that of overcoming the above mentioned drawbacks, by a method which can be used to manufacture moulds in an extremely fast and inexpensive way, which moulds are for use in the injection moulding of a relatively limited series (for instance in the order of about 500-1000 pieces) of components of plastic material, such as motor-vehicle dashboards, having strength characteristics which are relatively high and anyway sufficient to overcome the crash resistance tests provided by the regulations.

In view of achieving this object, the invention provides a method for manufacturing a mould for use in injection moulding of components of plastic material, characterized in that it comprises the following steps:
- providing a model having a surface corresponding to the shape of the component to be obtained,
- spraying a metal layer on said surface,
- providing a formwork above said model, the bottom of said formwork being defined by said surface coated with a metal layer,
- pouring refractory concrete within the formwork so as to obtain, upon hardening of the concrete, a first half-mould constituted by a block of hardened concrete with the associated formwork,
- separating the model from the first half-mould thus obtained and applying a layer having a predetermined thickness of a filling material above the metal surface of the first half-mould,
- spraying a further metal layer above this filling material,
- providing a second formwork above this further metal layer and pouring concrete therein so as to obtain, upon hardening, a second half-mould constituted by a block of hardened concrete and the associated formwork.

Due to the above mentioned features, the above mentioned method can be used to make two half-moulds extremely rapidly which can then be used for injection moulding of a component of plastic material. When carrying out the injection moulding, each of the two half-moulds, by virtue of its structure (block of hardened refractory concrete surrounded by the associated formwork) is able to withstand relatively high pressures and temperatures (such as temperatures in the order of 260°C and pressures in the order of 460 bars), which ensures that a component of plastic material is obtained having relatively high strength characteristics and adequate anyway for overcoming the crash resistance tests provided by the regulations.

Thus it is possible to provide small series of components, such as driving dashboards, front and rear bumpers and panels for the passenger compartment, with reduced costs and time, which components can be used on the first prototypes of a new model of motor-vehicle to be introduced into production so that these prototypes can be used also for carrying out the crash resistance tests which are needed for the homologation of the new model, without waiting initiation of the mass production.

In a preferred embodiment of the method according to the invention, each formwork is made of welded metal sheets, and the concrete is filled with toothed needles of stainless steel and is preferably of a type commercially available under the trademark "Plicast".

Naturally, before the concrete is poured, within the formworks used for making the two half-moulds, there are provided the further elements (such as ejector devices, pouring channels, cooling tubes, etc.) which are requested in the half-moulds.

Further features and advantages of the invention will become apparent from the description which follows with reference to the annexed drawings, given purely by way of non limiting example, in which:

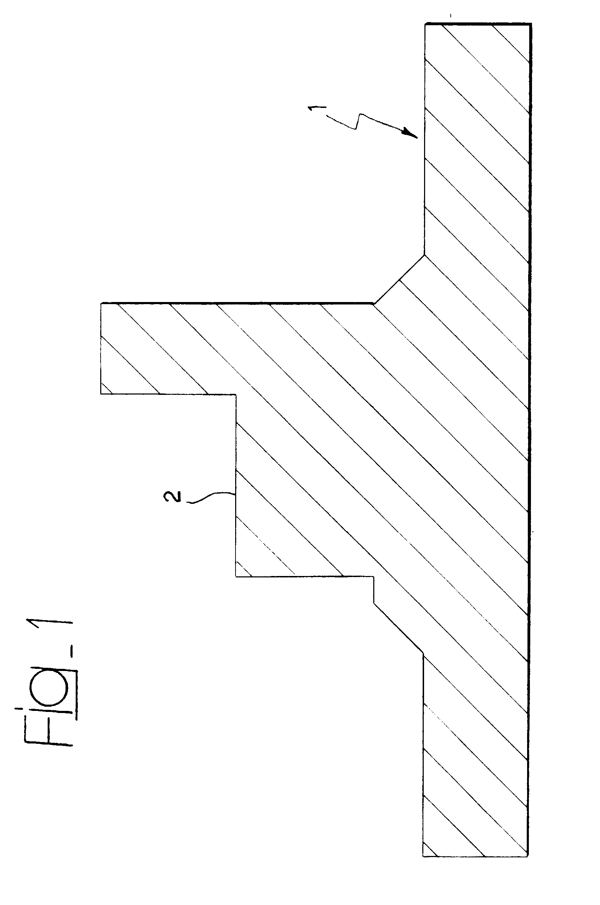

figures **1-7** diagrammatically show the various steps of a preferred embodiment of the method according to the invention.

With reference to figure 1, a model 1 is initially provided having a body made of resin (such as the resin available on the market under the trademark "Ureol") which is obtained by a numerically controlled machine tool. The model 1 is provided with a surface 2 corresponding to the shape of the component of plastic material which must be produced.

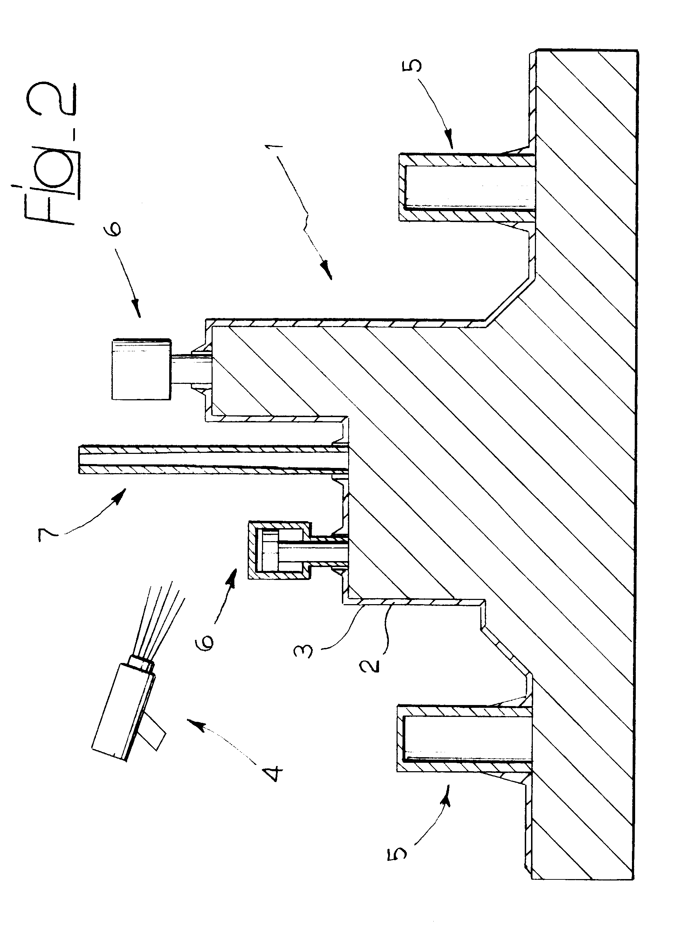

With reference to figure 2, on the surface 2 of model 1 a metal layer 3, such as a zinc layer, is deposited by a known technique, with the aid of a spraying gun 4. Before spraying the layer 3, the surface 2 is coated with a layer of separating material, for easier separation of the metal layer 3 from surface 2 of model 1 at a subsequent step of the process.

As also shown in figure 2, at this step a number of elements are provided above the model 1 which are to be embedded within the first half-mould to be obtained. In particular, guiding cylinders 5 are provided, whose function will become clear in the following, along with ejector devices 6, which are for enabling the component to be ejected from the mould after injection moulding, and finally a pouring channel 7.

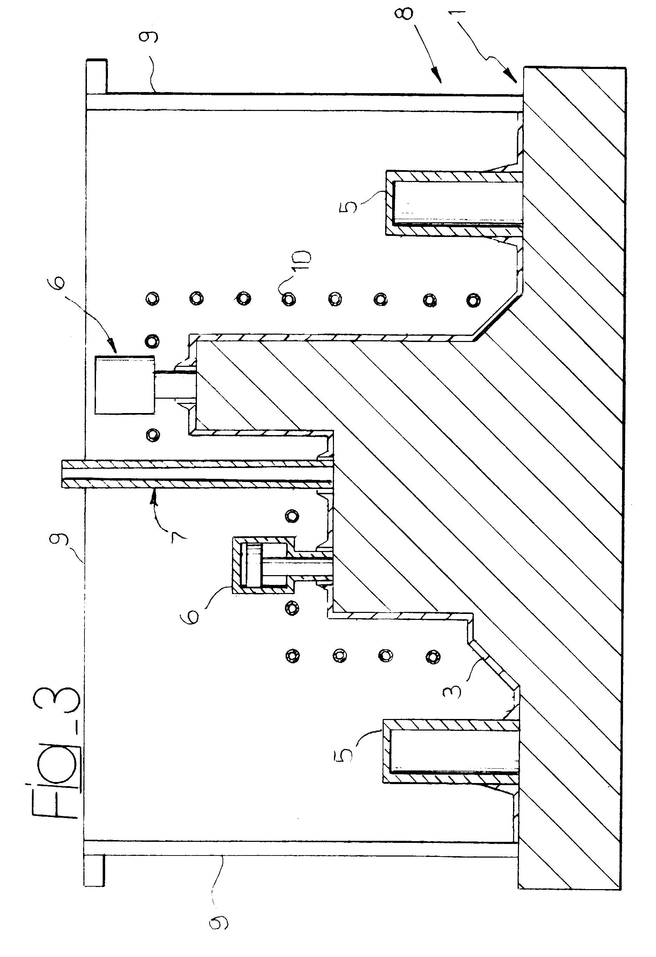

With reference to figure 3, above the model 1 a formwork 8 is then provided which is defined by a frame of welded metal sheets, comprising two pairs of opposite walls 9 which define a cavity whose bottom wall is constituted by the metal wall 3. The metal formwork 8 is also used to support tubes 10 within the cavity which are for passage of a cooling fluid during use of the mould which is manufactured with the process according to the invention.

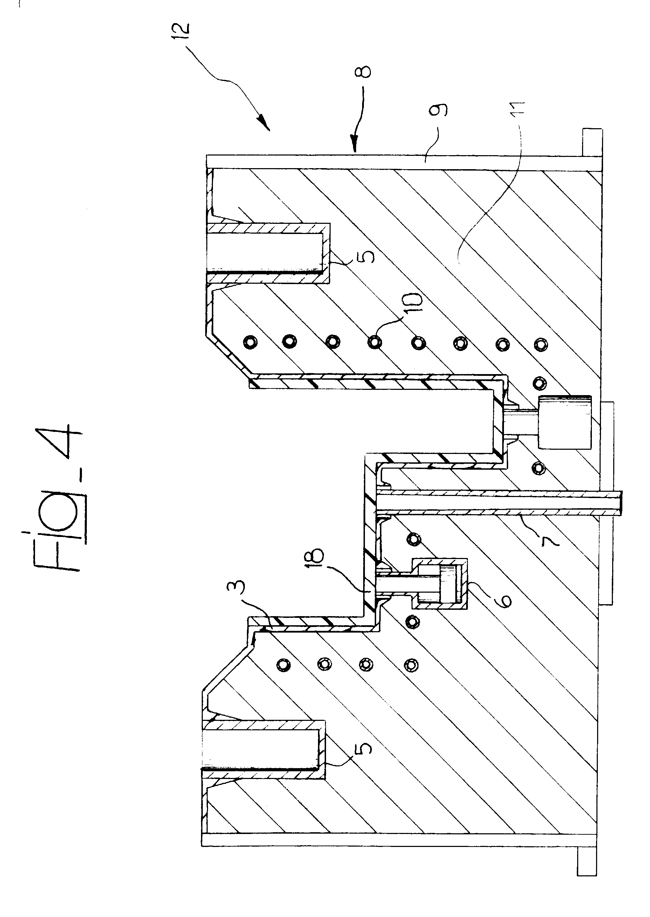

At this time, within the cavity defined by the formwork 8, concrete is poured, such as concrete of the type available on the market under the trademark "Plicast", preferably filled with toothed needles of stainless steel, whereupon the requested heat cycles are carried out, as known in the art. Upon hardening, the assembly constituted by the metal formwork 8, with the block of hardened concrete therewithin, designated by 11 in figure 4, constitutes a first half-mould, whose active surface is constituted by the metal layer 3. This assembly is separated from model 1 (see figure 4), so as to provide the above mentioned first half-mould generally designated by 12 in figure 4.

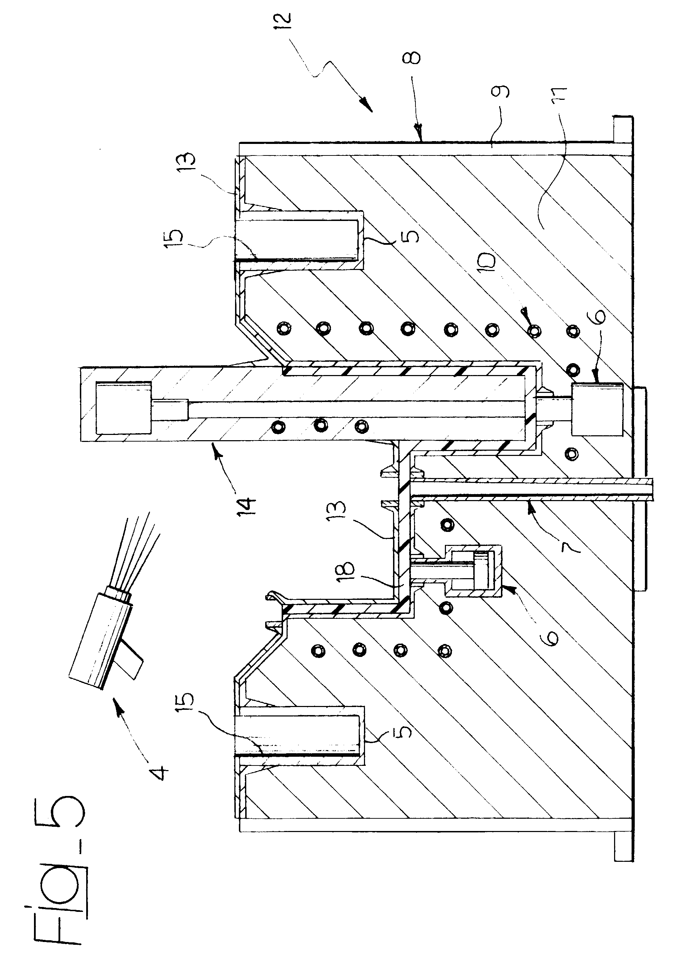

At this time, on the metal coating 3 of the active surface of the first half-mould 12 there is applied a layer of filling material having a predetermined thickness, such as gouged wax, having the same thickness as the component which must be obtained by injection moulding. This layer is designated by reference numeral 13 in figure 4. The spraying step is then repeated of a layer of metal material, such as zinc, 14 (figure 5) upon providing auxiliary elements, such as an ejector device 14 and guiding columns 15 which are for slidably engaging the cylinders 5.

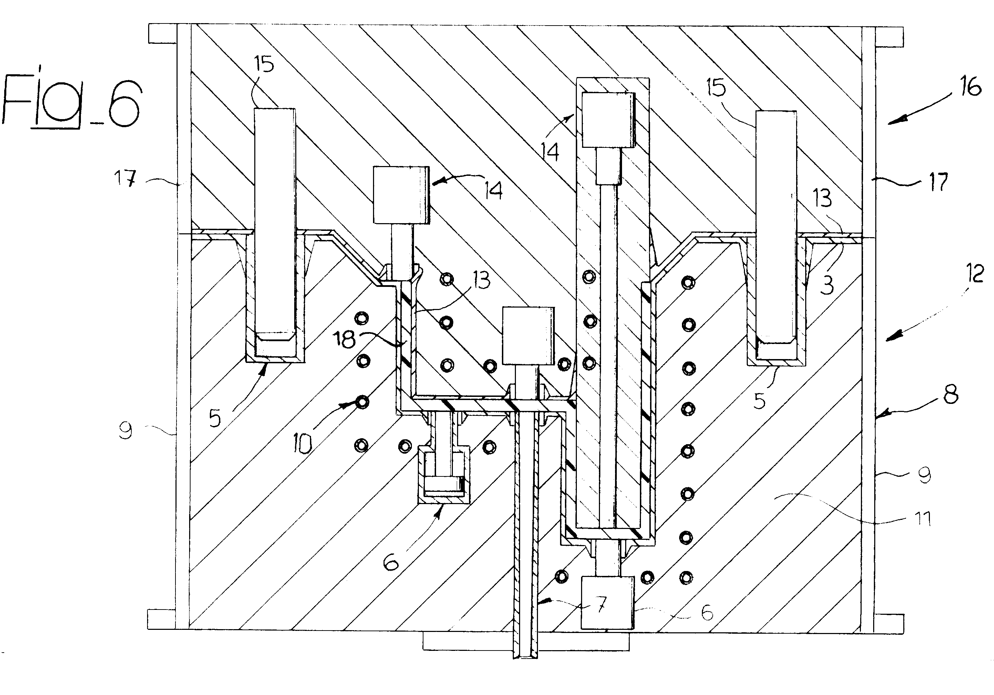

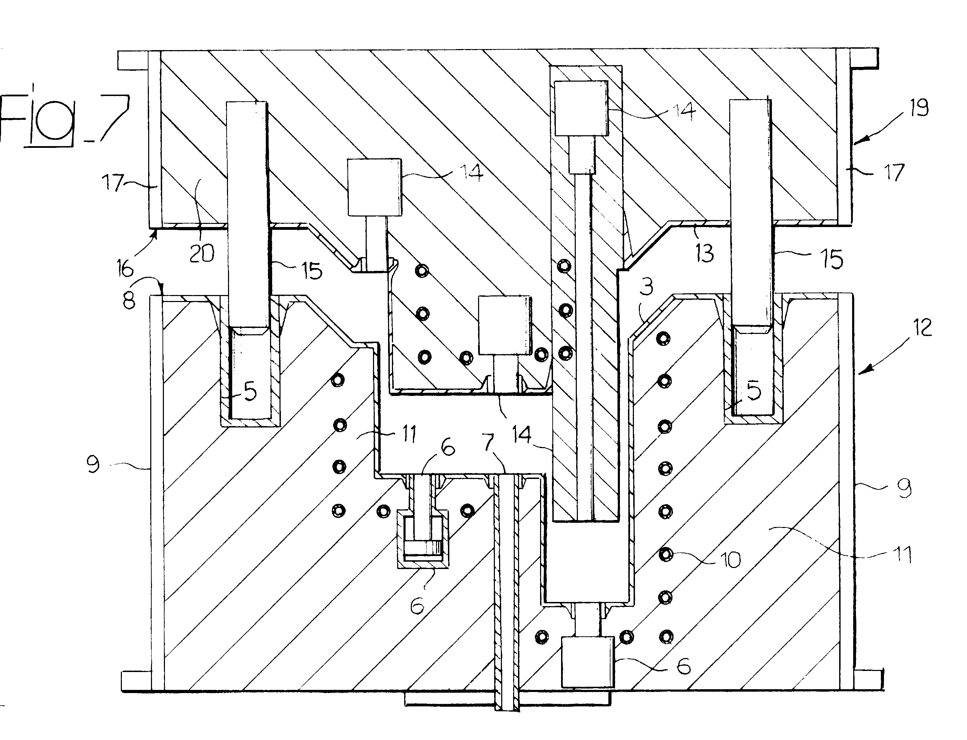

With reference to figure 6, above the metal layer 13 a formwork 16 is then provided which is defined by a frame of welded metal sheets, comprising two pairs of opposite walls 17 which define a cavity whose bottom is constituted by the metal layer 13. Within this cavity, concrete is then poured (preferably Plicast filled with toothed needles of stainless steel) and the requested heat cycles are then carried out. A second half-mould 19 is thus obtained (see figure 7) which can be separated from the underlying structure, and is constituted by the metal formwork 17 with the hardened concrete block 20. The wax 13 is naturally eliminated. The metal walls 3, 13 are cleaned and polished and the two half-moulds 12, 19 are mounted in a press for the production by injection moulding of relatively limited series (such as in the order of 500-1000 pieces) of components of plastic material. The two half-moulds 12, 19 are able to withstand relatively high temperatures and pressures (260°C and 460 bars) due to the refractory characteristics of the concrete which is used and the supporting formwork surrounding the concrete block. It is thus possible to make components having relatively high strength characteristics and anyhow able to pass the crash resistance tests successfully which are provided by the safety regulations for motor-vehicle components, such as driving dashboards, bumpers, etc.

Thus, by the method according to the invention a moulding apparatus can be obtained rapidly and cheaply which can be used for producing components of plastic material such as motor-vehicle dashboards, which apart from having the same haestetical features of the final component used in the mass production, are also able to pass the tests requested for the homologation of the motor-vehicle.

Naturally, while the principle of the invention remains the same, the embodiments and the details of construction may widely vary with respect to what has been described and illustrated purely by way of example, without departing from the scope of the present invention.

## Claims

1. Method for manufacturing a mould for use in injection moulding of components of plastic material, characterized in that it comprises the following steps:
- providing a model (1) having a surface (2) corresponding to the shape of the component to be obtained,
- spraying a metal layer (3) on said surface (2) of the model (1),
- providing a formwork (8) above the model (1), with the bottom of the formwork (8) being defined by said surface (2) coated with the metal layer (3),
- pouring refractory concrete within said formwork (8) so as to obtain, upon hardening, a first half-mould (12) constituted by a block of hardened concrete (11) with the associated formwork (8),
- separating the model (1) from the first half-mould (12) thus obtained and applying a layer having a predetermined thickness (18) of a filling material above the metal layer (3) of the first half-mould (12),
- spraying a further metal layer (13) above said filling material (18),
- providing a formwork (16) above said further metal layer (13) and pouring refractory concrete therewithin, so as to obtain, upon hardening, a second half-mould (19) constituted by a block of hardened concrete and the associated formwork (16).

2. Method according to claim 1, characterized in that the formwork (8, 16) surrounding each of the two hardened concrete blocks (11, 20) of the two half-moulds (12, 19) is made of welded metal sheets.

3. Method according to claim 1, characterized in that the concrete used for the two half-moulds (12, 19) is filled with needles of stainless steel.

4. Method according to claim 1, characterized in that before pouring the concrete for obtaining each of the two half-moulds (12, 19), there are provided auxiliary elements, such as ejector devices (6), pouring channels (7), guiding elements (5, 15) which are to be embedded within the concrete blocks (11, 20) constituting the two half-moulds (12, 19).

5. Mould for injection moulding of components of plastic material, characterized in that it is obtained by a method according to any of the previous claims.
